# EUROPEAN PATENT APPLICATION

(11) **EP 3 310 091 A1**
(43) Date of publication of application: **18.04.2018**
(21) Application number: 17205440.5
(22) Date of filing: 20.03.2015
(51) Int. Cl.: H04W 28/04, H04W 72/04, H04L 1/18, H04L 1/00, H04L 1/16

(54) **SECONDARY BASE STATION, MOBILE STATION, COMMUNICATION CONTROL METHOD, AND MASTER BASE STATION**

(30) Priority: 20.03.2014 JP 2014057932
(62) Divisional of application: 15764989.8
(71) Applicant: Kyocera Corporation, Kyoto-shi Kyoto 612-8501 (JP)
(72) Inventor: FUJISHIRO, Masato, Kyoto, 612-8501 (JP); MATSUI, Katsuhiro, Kyoto, 612-8501 (JP); NAGASAKA, Yushi, Kyoto, 612-8501 (JP)
(74) Representative: Schwabe - Sandmair - Marx

(57) **Abstract**

A secondary base station according to an embodiment comprises: a receiver configured to receive a packet addressed to a mobile station, that is transferred from a master base station via a split bearer in a dual connectivity scheme; and a controller configured to report, to the master base station, information indicating a lost packet from among the packets addressed to the mobile station transferred from the master base station.

## Description

### TECHNICAL FIELD

The present invention relates to a secondary base station, a mobile station, a communication control method, and a master base station used in a mobile communication system.

### BACKGROUND ART

In 3GPP (3rd Generation Partnership Project), which is a project aiming to standardize a mobile communication system, introduction of a dual connectivity scheme (Dual connectivity) in Release 12 and onward is expected (see Non Patent Document 1). In the dual connectivity scheme, a mobile station simultaneously establishes a connection with a plurality of base stations. The mobile station is allocated with a radio resource from each base station, and thus, it is possible to expect an improvement in throughput.

In the dual connectivity scheme, of the plurality of base stations that establish a connection with the mobile station, only one base station (hereinafter, called the "master base station") establishes an RRC connection with the mobile station. On the other hand, of the plurality of base stations, another base station (hereinafter, called the "secondary base station") provides an additional radio resource to the mobile station without establishing an RRC connection with the mobile station. It is noted that the dual connectivity scheme may also be called an inter-base station carrier aggregation (inter-eNB CA).

### PRIOR ART DOCUMENT

### NON-PATENT DOCUMENT

Non Patent Document 1: 3GPP technical report "TR 36.842 V12.0.0" January 7, 2014

### SUMMARY OF THE INVENTION

A secondary base station according to an embodiment comprises: a receiver configured to receive a packet addressed to a mobile station, that is transferred from a master base station via a split bearer in a dual connectivity scheme; and a controller configured to report, to the master base station, information indicating a lost packet from among the packets addressed to the mobile station transferred from the master base station.

A secondary base station according to an embodiment comprises: a transmitter configured to transmit, to a mobile station, a PDCP packet received from a master base station via a split bearer in a dual connectivity scheme; and a controller configured to report, to the master base station, a sequence number of a PDCP packet that has been successfully transmitted to the mobile station from among the PDCP packets received from the master base station.

A communication control method according to an embodiment is a communication control method in a mobile communication system comprising a mobile station capable of receiving, from a first radio base station and a second radio base station, downlink data belonging to a split bearer. The first radio base station transmits, to the mobile station, first data belonging to the split bearer, and transfers, to the second radio base station, second data belonging to the split bearer. The second radio base station transmits, to the mobile station, the second data. After transmitting the second data transferred from the first radio base station, the second radio base station transmits, to the first radio base station, a predetermined message about the second data.

A communication control method according to an embodiment is a communication control method in a mobile communication system comprising a mobile station configured to receive, from a first radio base station and a second radio base station, downlink data belonging to a split bearer. The first radio base station transmits, to the mobile station, first data belonging to the split bearer, and transfers, to the second radio base station, second data belonging to the split bearer. The second radio base station transmits, to the mobile station, the second data. The second radio base station transmits, when deciding to release a connection with the mobile station, a release request signal to the first radio base station. The release request signal includes information on the second data that has already been transmitted as of the release of the connection with the mobile station.

In a communication control method according to an embodiment, a mobile station transmits, to a first radio base station, first uplink data belonging to a split bearer by using a radio resource allocated from the first radio base station, and transmits, to a second radio base station, second uplink data belonging to the split bearer by using a radio resource allocated from the second radio base station. The mobile station transmits, to the first base station, the second uplink data not transmitted to the second radio base station, when the second radio base station stops the allocation of the radio resource.

In a communication control method according to an embodiment, the second radio base station transfers, to the first radio base station, the second uplink data received from the mobile station. The first radio base station controls an order of the first uplink data and the second uplink data by using an order control timer. The first radio base station stops the order control timer when the second radio base station stops the allocation of the radio resource.

In a communication control method according to an embodiment, a mobile station transmits, to the first radio base station, first data belonging to a split bearer, and transmits, to the second radio base station, second data belonging to the split bearer. The second radio base station transfers the second data to the first radio base station. The first radio base station performs order control of the first data and the second data, and generates the PDCP packet. The first radio base station discards, upon the release of the split bearer, data awaiting a process of generation of the PDCP packet from the first data and the second data. The first radio base station transmits, upon the release of the split bearer, to the mobile station, a retransmission request for requesting the discarded data.

A master base station according to an embodiment comprises: a transmitter configured to transfer, via a split bearer, a packet addressed to a mobile station in a dual connectivity scheme; and a controller configured to receive, from a secondary base station, information indicating a lost packet from among the packets addressed to the mobile station.

A master base station according to an embodiment comprises: a transmitter configured to transmit, to a mobile station, a PDCP packet via a split bearer in a dual connectivity scheme; and a controller configured to receive, from a secondary base station, a sequence number of a PDCP packet that has been successfully transmitted to the mobile station from among the PDCP packets.

### BRIEF DESCRIPTION OF THE DRAWINGS

Fig. 1 is a configuration diagram of an LTE system according to an embodiment.
Fig. 2 is a block diagram of a UE according to the embodiment.
Fig. 3 is a block diagram of an eNB according to the embodiment.
Fig. 4 is a configuration diagram of a bearer of a dual connectivity scheme according to the embodiment.
Fig. 5 is a sequence diagram for describing an operation (an operation example 1) according to the embodiment.
Fig. 6 is a sequence diagram for describing an operation (an operation example 2) according to the embodiment.
Fig. 7 is a sequence diagram for describing an anomaly detection process according to the embodiment.
Fig. 8 is a sequence diagram for describing an operation (an operation example 3) according to the embodiment.
Fig. 9 is a sequence diagram for describing an operation (an operation example 4) according to the embodiment.
Fig. 10 is a sequence diagram for describing an operation (an operation example 5) according to the embodiment.

### DESCRIPTION OF THE EMBODIMENT

### (System Configuration)

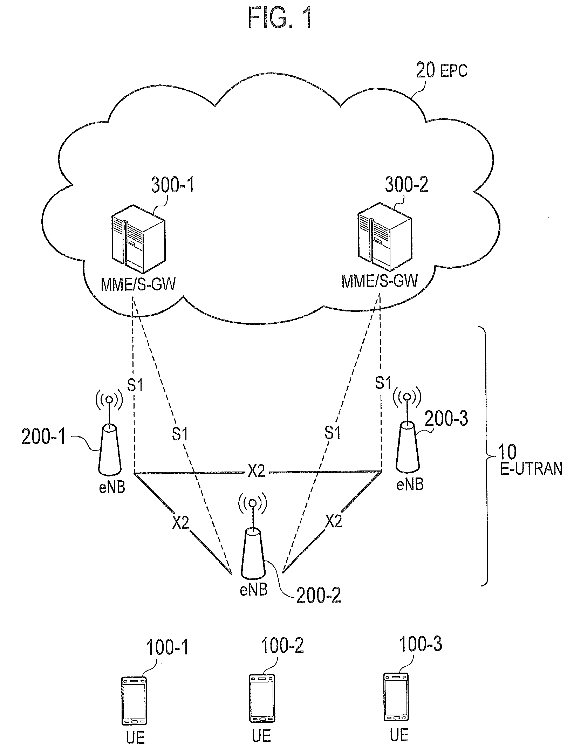

Fig. 1 is a configuration diagram of an LTE system according to an embodiment.

As illustrated in Fig. 1, the LTE system according to the embodiment comprises UEs (User Equipments) 100, E-UTRAN (Evolved-UMTS Universal Terrestrial Radio Access Network) 10, and EPC (Evolved Packet Core) 20.

The UE 100 corresponds to a mobile station. The UE 100 is a mobile communication device and performs radio communication with a cell (a serving cell). Configuration of the UE 100 will be described later.

The E-UTRAN 10 corresponds to a radio access network. The E-UTRAN 10 includes eNBs 200 (evolved Node-Bs). The eNB 200 corresponds to a radio base station. The eNBs 200 are connected mutually via an X2 interface. Configuration of the eNB 200 will be described later.

The eNB 200 controls a cell or a plurality of cells, and performs radio communication with the UE 100 that establishes a connection with the cell of the eNB 200. The eNB 200, for example, has a radio resource management (RRM) function, a routing function of user data, and a measurement control function for mobility control and scheduling. The "cell" is used as a term indicating a minimum unit of a radio communication area, and is also used as a term indicating a function of performing radio communication with the UE 100.

The EPC 20 corresponds to a core network. The EPC 20 includes MMEs (Mobility Management Entities)/S-GWs (Serving-Gateways) 300. The MME performs various mobility controls, etc., for the UE 100. The SGW performs transfer control of user data. The MME/S-GW300 connected to the eNBs 200cia an S1 interface.

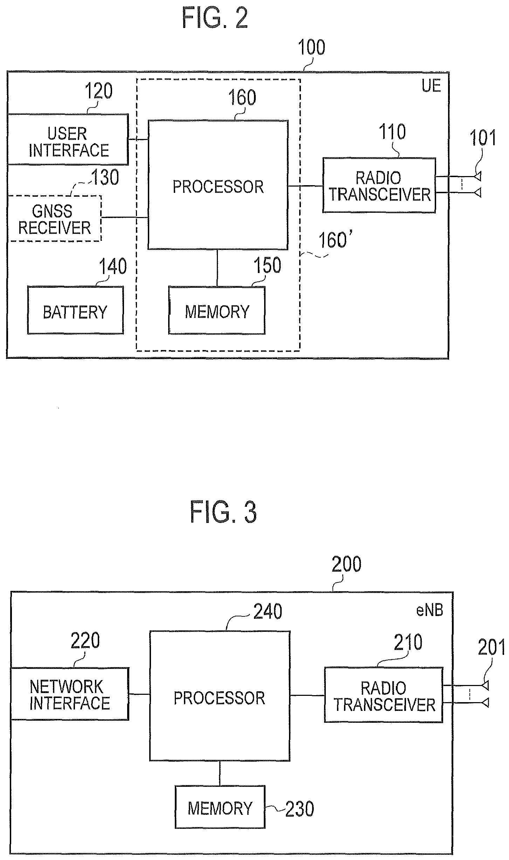

Fig. 2 is a block diagram of the UE 100. As illustrated in Fig. 2, the UE 100 comprises a plurality of antennas 101, a radio transceiver 110, a battery 140, a memory 150, and a processor 160. The memory 150 and the processor 160 constitute a control unit. The memory 150 may be integrally formed with the processor 160, and this set (that is, a chipset) may be called a processor 160'.

The antennas 101 and the radio transceiver 110 are used to transmit and receive a radio signal. The radio transceiver 110 converts a baseband signal (a transmission signal) output from the processor 160 into the radio signal, and transmits the radio signal from the antennas 101. Furthermore, the radio transceiver 110 converts the radio signal received by the antenna 101 into a baseband signal (a reception signal), and outputs the baseband signal to the processor 160.

The battery 140 accumulates a power to be supplied to each block of the UE 100.

The memory 150 stores a program to be executed by the processor 160 and information to be used for a process by the processor 160. The processor 160 includes a baseband processor that performs modulation and demodulation, encoding and decoding and the like of the baseband signal, and a CPU (Central Processing Unit) that performs various processes by executing the program stored in the memory 150. The processor 160 may further include a codec that performs encoding and decoding of sound and video signals. The processor 160 implements various processes and various communication protocols described later.

Fig. 3 is a block diagram of the eNB 200. As illustrated in Fig. 3, the eNB 200 comprises a plurality of antennas 201, a radio transceiver 210, a network interface 220, a memory 230, and a processor 240. The memory 230 and the processor 240 constitute a control unit. The memory 230 may be integrally formed with the processor 240, and this set (that is, a chipset) may be called a processor.

The antennas 201 and the radio transceiver 210 are used to transmit and receive a radio signal. The radio transceiver 210 converts a baseband signal output (a transmission signal) from the processor 240 into the radio signal, and transmits the radio signal from the antenna 201. Furthermore, the radio transceiver 210 converts the radio signal received by the antenna 201 into a baseband signal (a reception signal), and outputs the baseband signal to the processor 240.

The network interface 220 is connected to the neighboring eNB 200 via the X2 interface and is connected to the MME/S-GW 300 via the S1 interface. The network interface 220 is used in communication performed on the X2 interface and communication performed on the S1 interface.

The memory 230 stores a program to be executed by the processor 240 and information to be used for a process by the processor 240. The processor 240 includes the baseband processor that performs modulation and demodulation, and encoding and decoding of the baseband signal and a CPU that performs various processes by executing the program stored in the memory 230. The processor 240 implements various processes and various communication protocols described later.

### (Dual connectivity scheme)

An LTE system according to an embodiment supports a dual connectivity scheme in an uplink.

In the dual connectivity scheme, of the plurality of eNBs that establish a connection with a UE 100, only a master eNB (MeNB) 200-1 establishes an RRC connection with the UE 100. On the other hand, a secondary eNB (SeNB) 200-2 of the plurality of the eNBs establishes a connection with the UE 100 in a layer that is lower than the RRC layer, and does not establish an RRC connection with the UE 100.

Further, in a user data control of the dual connectivity scheme, the MeNB 200-1 provides functions of a physical layer, a MAC layer, an RLC layer, and a PDCP layer. On the other hand, the SeNB 200-2 provides functions of a physical layer, a MAC layer, and an RLC layer, and does not provide a function of a PDCP.

An Xn interface is set between the MeNB 200-1 and the SeNB 200-2. The Xn interface is either an X2 interface or a new interface. The Xn interface is used for exchanging a control signal, and exchanging the user data between the MeNB 200-1 and the SeNB 200-2.

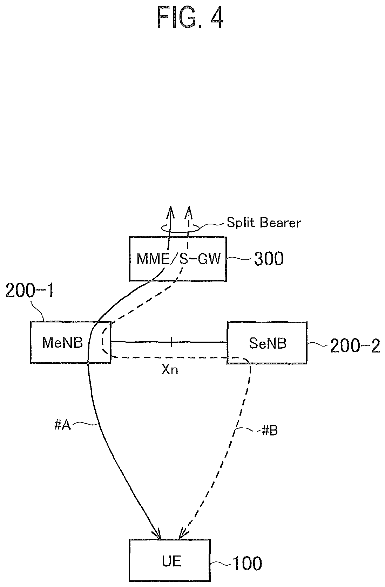

A path of the user data of a bearer of the dual connectivity scheme (a Split Bearer) will be described by using Fig. 4.

The Split Bearer is set between the UE 100 and the MeNB 200-1 (path #A), and from the UE 100 via the SeNB 200-2 to the MeNB 200-1 (path #B). The Split Bearer may be applied to the exchange of both uplink and downlink data, or may be applied to the exchange of either the uplink data or the downlink data.

### (Downlink data control: Release request from the MeNB 200-1)

When the Split Bearer is set, the MeNB 200-1 transmits downlink data to the UE 100 via the SeNB 200-2 by using the path #B, while directly transmitting the downlink data to the UE 100 by using the path #A.

### (A) Operation example 1

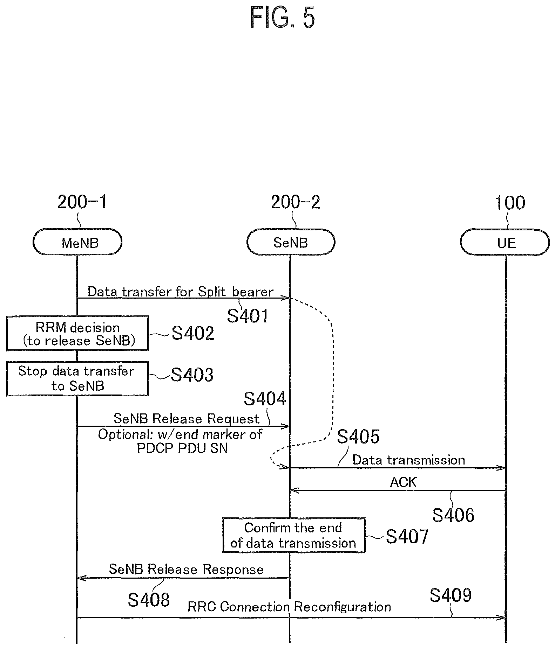

Next, an operation (an operation example 1) in which the MeNB 200-1 releases the path #B of the Split Bearer, and transits to a normal connectivity scheme will be described by using Fig. 5.

The MeNB 200-1 uses the Xn interface to transfer the downlink data of the Split Bearer to the SeNB 200-2 (S401).

The MeNB 200-1 stops the transmission of the downlink data via the SeNB 200-2 for the Split Bearer, and decides to release the SeNB 200-2 (S402). Specifically, the MeNB 200-1 decides to release the path #B. This decision may be made by an RRM (Radio Resource Management) function of the MeNB 200-1.

Upon deciding to release the path #B, the MeNB 200-1 stops the transmission of the downlink data to the SeNB 200-2 (S403).

The MeNB 200-1 notifies the SeNB 200-2 of the release request of the path #B (S404). As a result of the notification, the MeNB 200-1 requests the release of the additional radio resource provided by the SeNB 200-2 for the Split Bearer.

The release request may be transmitted by using a SeNB Release Request message. Further, the SeNB Release Request message may include information on the Split Bearer to be released.

The release request may include information for identifying the last downlink data that the MeNB 200-1 transfers to the SeNB 200-2. For example, the information for identifying the last downlink data may be an End Marker that includes the sequence number of the last PDCP packet (PDCP PDU) transmitted by the MeNB 200-1.

The SeNB 200-2 transmits the downlink data received from the MeNB 200-1 to the UE 100 (S405).

Further, the SeNB 200-2 receives an Ack with an indication of a successful data reception, as a delivery acknowledgment signal of the downlink data (a PDCP packet), from the UE 100(S406).

The SeNB 200-2 confirms that an Ack is received for the last downlink data (S407).

After confirming that an Ack is received for the last downlink data, the SeNB 200-2 transmits a response signal to the release request, to the MeNB 200-1 (S408). The response signal may use a SeNB Release Response message.

Upon receiving the response signal to the release request that is transmitted from the SeNB 200-2, the MeNB 200-1 performs resetting of the RRC connection (RRC Connection Reconfiguration) with the UE 100 (S409). As a result of resetting the RRC connection, the setting of the radio interval changes from the dual connectivity scheme to a normal connectivity scheme.

As a result of using this method, the SeNB 200-2 is capable of releasing the path of the Split Bearer after confirming that the last downlink data has been received by the UE 100.

### (B) Operation example 2

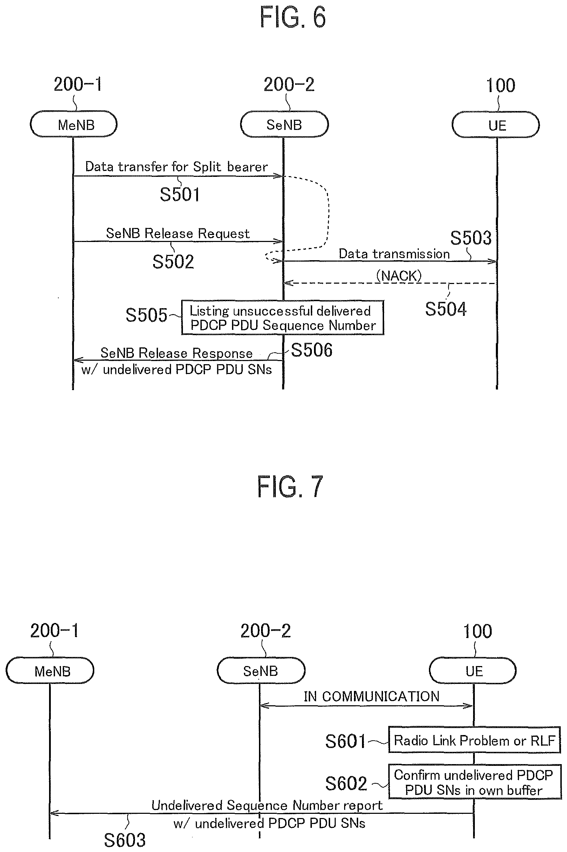

Next, another operation (an operation example 2) in which the MeNB 200-1 releases the path #B of the Split Bearer, and transits to a normal connectivity scheme will be described by using Fig. 6.

The MeNB 200-1 uses the Xn interface to transfer the downlink data of the Split Bearer to the SeNB 200-2 (S501, data transfer for split bearer).

The MeNB 200-1 notifies the SeNB 200-2 of the release request of the path #B (S502). As a result of the notification, the MeNB 200-1 requests the release of the additional radio resource provided by the SeNB 200-2 for the Split Bearer.

The release request may be transmitted by using a SeNB Release Request including the information on the Split Bearer to be released.

The SeNB 200-2 transmits the downlink data (a PDCP packet) to the UE 100 (S503).

The SeNB 200-2 receives a Nack signal with an indication of an unsuccessful reception of the downlink data (S504), as a delivery acknowledgment signal, or the SeNB 200-2 identifies the downlink data (the PDCP packet) for which it is not possible to receive the delivery acknowledgement signal.

The SeNB 200-2 generates a list of unsuccessfully transmitted PDCP packets (S505).

The SeNB 200-2 transmits a response to the release request, to the MeNB 200-1 (S506). The response signal may include a list of unsuccessfully transmitted PDCP packets. Further, the response to the release request may use a SeNB Release Response message.

By using the present method, the MeNB 200-1 is capable of identifying the PDCP packet that the UE 100 has failed to receive.

### (Anomaly detection process)

Next, an operation when the UE 100 detects an anomaly in the path #B of the Split Bearer will be described by using Fig. 7.

The UE 100 performs exchange of data (the PDCP packet) with the SeNB 200-2 by using the path #B of the Split Bearer.

The UE 100 detects an anomaly in a radio link that is set between the UE 100 and the SeNB 200-2 (S601). Specifically, the UE 100 detects a problem in a radio link, an abnormal release, and a radio link failure (RLF).

Upon detecting an anomaly in the radio link, the UE 100 confirms the sequence number (PDU SN) of the unreceived PDCP packet (S602).

The UE 100 transmits the sequence number of the unreceived PDCP packet to the MeNB 200-1 (S603). For example, the UE 100 may transmit the sequence number of an untransmitted PDCP packet, which is included in an Undelivered Sequence Number Report message. Alternatively, the UE 100 may transmit a PDCP Status Report to the MeNB 200-1.

As a result, even when the UE 100 detects an anomaly in a radio link between the UE 100 and the SeNB 200-2, the UE 100 is capable of notifying the MeNB 200-1 of information that allows for recognition of an untransmitted PDCP packet. The MeNB 200-1 is capable of retransmitting an untransmitted PDCP packet.

### (Downlink data control: Release request from the SeNB 200-2)

### (C) Operation example 3

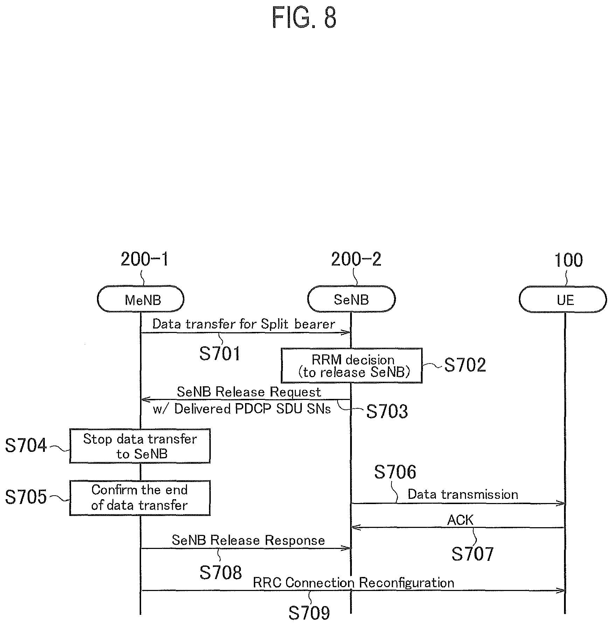

Next, an operation (an operation example 3) in which the SeNB 200-2 releases the path #B of the Split Bearer will be described by using Fig. 8.

The MeNB 200-1 transfers the downlink data to the SeNB 200-2 (S701). The SeNB 200-2 transmits the received downlink data to the UE 100.

The SeNB 200-2 decides to release the path #B of the Split Bearer (S702). For example, the RRM (Radio Resource Management) of the SeNB 200-2 decides to release the path #B of the Split Bearer.

The SeNB 200-2 transmits a release request for the path #B of the Split Bearer to the MeNB 200-1 (S703). The release request may use a SeNB Release Request message. Further, information for identifying the downlink data transmitted from the SeNB 200-1 to the UE 100, specifically, the sequence number of the PDCP SDU, may be included in the release request and transmitted. The information for identifying the downlink data is information on the downlink data that has already been transmitted as of the release of a connection with the UE 100 by the SeNB 200-1.

Upon receiving the release request from the SeNB 200-2, the MeNB 200-1 stops the transfer of data to the SeNB 200-2 (S704). More specifically, when the MeNB 200-1 receives the release request from the SeNB 200-2, and determines acceptance (RRM decision), the MeNB 200-1 stops the transfer of data to the SeNB 200-2.

The MeNB 200-1 confirms the last data transmitted by the SeNB 200-2 to the UE 100 (S705).

The SeNB 200-2 transmits the data transferred from the MeNB 200-1 to the UE 100 (S706). The SeNB 200-2 receives a confirmation signal (Ack) from the UE 100 (S707).

The MeNB 200-1 transmits a response to the release request, to the SeNB 200-2 (S708). The response to the release request may use a SeNB Release Response message.

The MeNB 200-1 performs reconfiguration of the RRC connection (RRC Connection Reconfiguration) with the UE 100 (S709). As a result of reconfiguration of the RRC connection, the setting of the radio interval changes from the dual connectivity scheme to a normal connectivity scheme.

### (Uplink data control: Release request from the MeNB 200-1)

### (D) Operation example 4

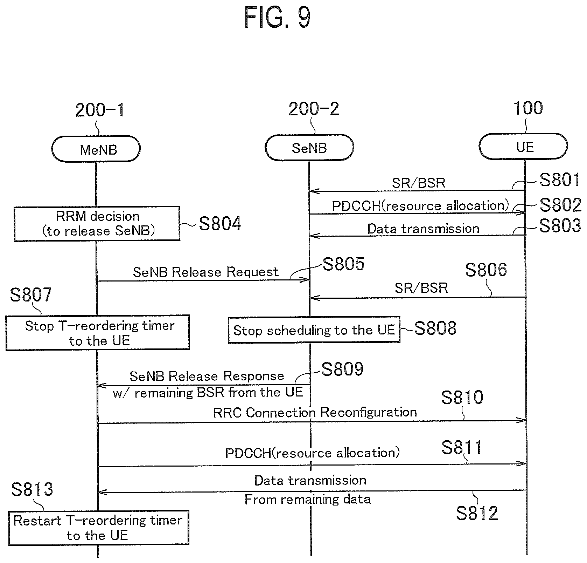

Next, an operation (an operation example 4) in which the MeNB 200-1 releases the path #B of the Split Bearer will be described by using Fig. 9.

When transmitting the uplink data by the dual connectivity scheme, the UE transmits a scheduling request (SR) and a buffer status report (BSR) to the SeNB 200-2 (S801). The buffer status report may be a report indicating a status of a transmission buffer region of the uplink data to the SeNB 200-2.

The SeNB 200-2 allocates, by a PDCCH, a resource for the UE to transmit the uplink data (S802).

Upon receiving the allocation of the resource, the UE 100 transmits the uplink data (S803).

The MeNB 200-1 decides to release the path #B of the Split Bearer (S804). For example, the RRM (Radio Resource Management) of the MeNB 200-1 decides to release the path #B of the Split Bearer.

The MeNB 200-1 transmits a release request for the path #B of the Split Bearer to the SeNB 200-2 (S805). The release request may use a SeNB Release Request message.

The UE 100 transmits the SR and the BSR to the SeNB 200-2 (S806), but the SeNB 200-2 stops the allocation of the resource for the uplink data transmission to the path #B of the Split Bearer (S808).

Upon transmitting the release request of the S805, the MeNB 200-1 stops the order control timer (S807).

The SeNB 200-2 transmits a response to the release request (S809). The response to the release request may use a SeNB Release Response message. Further, the SeNB 200-2 may include information on the untransmitted uplink data amount remaining in the uplink transmission buffer of the UE in the response to the release request. Further, the BSR received from the UE 100 may be included as is in the response to the release request.

The MeNB 200-1 performs reconfiguration of the RRC connection (RRC Connection Reconfiguration) with the UE 100 (S810). As a result of resetting the RRC connection, the reconfiguration of the radio interval changes from the dual connectivity scheme to a normal connectivity scheme. The order control timer may be resumed after the completion of the process of S810 (S813).

The MeNB 200-1 allocates, by PDCCH, a resource for the UE to transmit the uplink data (S811).

From the untransmitted uplink data remaining in the uplink transmission buffer, the UE transmits the uplink data to the MeNB 200-1 (S812).

As a result, even when the path #B of the Split Bearer is released, the UE 100 is capable of transmitting the uplink data by changing the transmission destination of the uplink data to be transmitted to the SeNB 200-2 to the MeNB 200-1. Further, after releasing the path #B of the Split Bearer, the MeNB 200-1 is capable of performing appropriate order control from the amount of the untransmitted uplink data to the SeNB 200-2.

### (E) Operation example 5

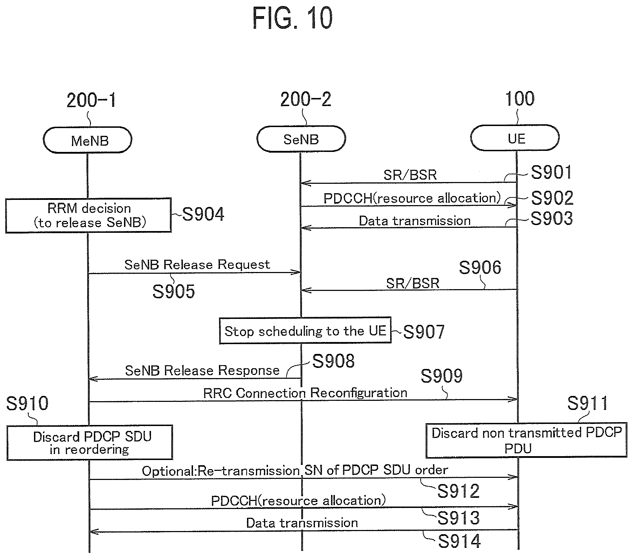

Next, an operation (an operation example 5) in which the MeNB 200-1 releases the path #B of the Split Bearer will be described by using Fig. 10. In the embodiment shown in Fig. 10, after releasing the path #B of the Split Bearer, the transmission destination of the untransmitted uplink data to the SeNB 200-2 is not changed to the MeNB 200-1. Next, the portions different from the embodiment shown in Fig. 9 will be described.

Since the procedures of S901 to S907 are the same as the embodiment shown in Fig. 9, a description thereof will be omitted.

The SeNB 200-2 transmits a response to the release request (S908). The response to the release request may use a SeNB Release Response message.

The MeNB 200-1 performs reconfiguration of the RRC connection (RRC Connection Reconfiguration) with the UE 100 (S909). Here, the procedure of S909 is similar to that of S810.

The MeNB 200-1 discards the PDCP packet (the RLC data) awaiting the generation of the PDCP SDU (IP packet) stored in the buffer of the MeNB 200-1 (S910).

The UE 100 discards the untransmitted PDCP packet (S911).

The MeNB 200-1 may notify the sequence number of the PDCP SDU that is to be retransmitted as a result of discard of the PDCP packet (the RLC data) awaiting, by the MeNB 200-1, generation (S912).

The MeNB 200-1 allocates, by PDCCH, a resource for the UE to transmit the uplink data (S913).

The UE 100 retransmits the uplink data to the MeNB 200-1 (S914). When notified of the sequence number of the PDCP SDU to be retransmitted, the UE performs retransmission.

When releasing the path #B of the Split Bearer, the MeNB 200-1 notifies the UE 100 of the information for identifying the data that is to be retransmitted. As a result, after releasing the path #B of the Split Bearer, the UE 100 is capable of transmitting the appropriate uplink data to the MeNB 200-1.

### [Other Embodiments]

In the above-described embodiment (the operation example 3), the SeNB 200-1 may notify the MeNB 200-1 of the information for identifying the downlink data transmitted to the UE 100 since a release request is transmitted to the MeNB 200-1 until a response signal is received for the release request from the MeNB 200-1.

In the above-described embodiment, description proceeds with a mode where the UE 100 performs dual connectivity by using the MeNB 200-1 and one SeNB 200-2; however, the UE 100 may use a similar procedure to perform dual connectivity also by using the MeNB 200-1 and a plurality of SeNBs 200-2.

Further, there is no particular limitation on the types of cell of the MeNB 200-1 and the SeNB 200-2 that perform dual connectivity. For example, dual connectivity communication may be performed with a combination of a macrocell and a small cell, a combination of a macro cell and a pico cell, a combination of a pico cell and a femto cell, and a combination of a macro cell and a macro cell.

In addition, the MeNB 200-1 may be configured to provide an additional resource by using a base station of a radio system other than the LTE, for example a WLAN AP, as the SeNB 200-2.

Furthermore, in the embodiment described above, although an LTE system is described as an example of a mobile communication system, the present invention is not limited to the LTE system, and may be applied to a system other than the LTE system.

It is noted that the entire content of Japanese Patent Application No. 2014-057932 (filed on March 20, 2014) is incorporated in the present specification by reference.

### INDUSTRIAL APPLICABILITY

As described above, according to the secondary base station, the mobile station, the communication control method, and the master base station of the present embodiment, it is possible to appropriately perform the dual connectivity communication, and as a result, the present invention is useful in the field of mobile communication.

The following examples listed below are directed to advantageous embodiments which may represent separate and independent inventions.
[A] A secondary base station, comprising:
   a receiver configured to receive a packet addressed to a mobile station, that is transferred from a master base station via a split bearer in a dual connectivity scheme; and
   a controller configured to report, to the master base station, information indicating a lost packet from among the packets addressed to the mobile station transferred from the master base station.
[B] The secondary base station according to embodiment A, wherein
   the receiver receives a message for releasing the split bearer, and
   the controller stops communication with the mobile station in response to the reception of the message.
[C] A secondary base station, comprising:
   a transmitter configured to transmit, to a mobile station, a PDCP packet received from a master base station via a split bearer in a dual connectivity scheme; and
   a controller configured to report, to the master base station, a sequence number of a PDCP packet that has been successfully transmitted to the mobile station from among the PDCP packets received from the master base station.
[D] A mobile station, comprising:
   a receiver configured to receive a PDCP packet from a secondary base station via a split bearer in a dual connectivity scheme; and
   a controller configured to detect an anomaly in a radio link between the mobile station and the secondary base station, wherein
   after detecting the anomaly in the radio link, the controller notifies the master base station of information for identifying a PDCP packet not received from the secondary base station.
[E] A communication control method in a mobile communication system comprising a mobile station capable of receiving, from a first radio base station and a second radio base station, downlink data belonging to a split bearer, wherein
   the first radio base station transmits, to the mobile station, first data belonging to the split bearer, and transfers, to the second radio base station, second data belonging to the split bearer,
   the second radio base station transmits, to the mobile station, the second data, and
   after transmitting the second data transferred from the first radio base station, the second radio base station transmits, to the first radio base station, a predetermined message about the second data.
[F] The communication control method according to embodiment E, wherein
   the first radio base station transmits, to the second radio base station, a message for releasing the split bearer, and
   the second radio base station transmits, when confirming that the mobile station has received the last data out of the second data, the predetermined message as a response to the message.
[G] The communication control method according to embodiment E, wherein the message includes information indicating the last data of the second data.
[H] The communication control method according to embodiment E, wherein the predetermined message includes information for identifying data that the mobile station has failed to receive, out of the second data.
[I] A communication control method in a mobile communication system comprising a mobile station configured to receive, from a first radio base station and a second radio base station, downlink data belonging to a split bearer, wherein
   the first radio base station transmits, to the mobile station, first data belonging to the split bearer, and transfers, to the second radio base station, second data belonging to the split bearer,
   the second radio base station transmits, to the mobile station, the second data,
   the second radio base station transmits, when deciding to release a connection with the mobile station, a release request signal to the first radio base station, and
   the release request signal includes information on the second data that has already been transmitted as of the release of the connection with the mobile station.
[J] The communication control method according to embodiment I, comprising:
   transmitting, by the first radio base station, to the second radio base station, a response signal in response to the release request; and
   notifying, by the second radio base station, the first radio base station of information for identifying the second data transmitted to the mobile station from after the transmission of the release request until a reception of the response signal.
[K] A communication control method, wherein a mobile station transmits, to a first radio base station, first uplink data belonging to a split bearer by using a radio resource allocated from the first radio base station, and transmits, to a second radio base station, second uplink data belonging to the split bearer by using a radio resource allocated from the second radio base station, and
   the mobile station transmits, to the first base station, the second uplink data not transmitted to the second radio base station, when the second radio base station stops the allocation of the radio resource.
[L] The communication control method according to embodiment K, wherein the second radio base station transfers, to the first radio base station, the second uplink data received from the mobile station,
   the first radio base station controls an order of the first uplink data and the second uplink data by using an order control timer, and
   the first radio base station stops the order control timer when the second radio base station stops the allocation of the radio resource.
[M] The communication control method according to embodiment K, wherein the first radio base station resumes the order control timer when a connection with the mobile station is reconfigured, or when the reconfiguration of the connection is complete.
[N] The communication control method according to embodiment K, wherein
   the mobile station reports a status of a buffer for the second uplink data, to the second radio base station, and
   when stopping the allocation of the radio resource, the second radio base station notifies the first radio base station of the status of the buffer.
[O] A communication control method, wherein a mobile station transmits, to the first radio base station, first data belonging to a split bearer, and transmits, to the second radio base station, second data belonging to the split bearer,
   the second radio base station transfers the second data to the first radio base station,
   the first radio base station performs order control of the first data and the second data, and generates the PDCP packet,
   the first radio base station discards, upon the release of the split bearer, data awaiting a process of generation of the PDCP packet from the first data and the second data, and
   the first radio base station transmits, upon the release of the split bearer, to the mobile station, a retransmission request for requesting the discarded data.
[P] The communication control method according to embodiment O, wherein the retransmission request includes a sequence number of a PDCP packet for identifying the discarded data.
[Q] A master base station, comprising:
   a transmitter configured to transfer, via a split bearer, a packet addressed to a mobile station in a dual connectivity scheme; and
   a controller configured to receive, from a secondary base station, information indicating a lost packet from among the packets addressed to the mobile station.
[R] A master base station, comprising:
   a transmitter configured to transmit, to a mobile station, a PDCP packet via a split bearer in a dual connectivity scheme; and
   a controller configured to receive, from a secondary base station, a sequence number of a PDCP packet that has been successfully transmitted to the mobile station from among the PDCP packets.

## Claims

1. A communication method in which a master base station and a secondary base station are configured to connect each other via an X2 interface and performing a dual connectivity communication, which is to transmit downlink data from the master base station through a split bearer to a user equipment, the mobile communication method comprising steps of:
transferring, from the master base station to the secondary base station, the downlink data;
receiving, at the secondary base station, the downlink data transferred from the master base station;
transmitting the received downlink data from the secondary base station to the user equipment;
deciding, at the secondary base station, a release of the split bearer; and
transmitting, from the secondary base station to the master base station, a release request for requesting the release of the split bearer in response to deciding the release of the split bearer.

2. The communication method according to claim 1, further comprising steps of:
transmitting a response to the release request from the master base station to the secondary base station;
receiving the response at the secondary base station; and
stopping, at the secondary base station, a transmission of the downlink data to the user equipment in response to a reception of the response.

3. The communication method according to claim 1, further comprising steps of:
transmitting a response to the release request from the master base station to the secondary base station;
receiving the response at the secondary base station; and
continuing, at the secondary base station, a transmission of the downlink data to the user equipment until a reception of the response.

4. The communication method according to claim 1, further comprising a step of:
transmitting, from the secondary base station to the master base station, information on a sequence number of the downlink data.

5. The communication method according to claim 4, wherein
the split bearer is split at a PDCP layer at the master base station, and
the sequence number is a sequence number in the PDCP layer.

6. A processor for controlling a secondary base station configured to connect to a master base station via an X2 interface and for being used for a dual connectivity communication, which is to transmit downlink data from the master base station through a split bearer to a user equipment, wherein the processor is configured to execute processes of:
receiving the downlink data transferred from the master base station;
transmitting the downlink data received by the receiver to the user equipment;
deciding a release of the split bearer; and
transmitting a release request for requesting the release of the split bearer to the master base station in response to deciding the release of the split bearer.

7. A secondary base station comprising the processor according to claim 6.
